# EUROPEAN PATENT APPLICATION

(11) **EP 4 814 902 A1**
(43) Date of publication of application: **30.09.2026**
(21) Application number: 25166733.3
(22) Date of filing: 27.03.2025
(51) Int. Cl.: G06V 20/59

(54) **METHODS AND SYSTEMS FOR MONITORING A DRIVER OF A VEHICLE**

(71) Applicant: Aptiv Technologies AG, 8200 Schaffhausen (CH)
(72) Inventor: PYREK, Tomasz, 30-605 KRAKOW (PL)
(74) Representative: Manitz Finsterwald Patent- und Rechtsanwaltspartnerschaft mbB

(57) **Abstract**

A computer implemented method for monitoring a driver of a vehicle includes the following steps carried out by computer hardware components: determining, from image data captured by an image sensor located in a cabin of the vehicle, at least one viewing vector of the driver; determining a distraction area of at least one source of distraction inside the cabin of the vehicle and outside a field of view of the image sensor, wherein the distraction area is determined from data captured by a position detection unit of the vehicle; determining a driver distraction value based on an extent to which the at least one viewing vector intersects the at least one distraction area of the at least one source of distraction; and triggering a warning signal in response to determining that the driver distraction value is greater than a threshold.

## Description

### FIELD

The present disclosure relates to methods and systems for monitoring a driver of a vehicle, in particular for driver distraction detection.

### BACKGROUND

Driver distraction is a phenomenon that may lead to tragedy. Due to a growing number of external stimuli, driver distraction is becoming more and more common nowadays. One of these stimuli is undoubtedly the use of electronic devices, for example phones or tablets. Many drivers are attempting to use their phones while driving, not only for calling but also for texting, sending e-mails, browsing social media, etc. The use of electronic devices by the driver of a vehicle while driving can distract the driver and can lead to accidents, as the driver is not looking at the road but at the electronic device.

Accordingly, there is a need for monitoring a driver of a vehicle and accurately detecting and quantifying driver distraction.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for monitoring a driver of a vehicle, the method comprising the following steps carried out by computer hardware components: determining, from image data captured by an image sensor located in a cabin of the vehicle, at least one viewing vector of the driver; determining a distraction area of at least one source of distraction inside the cabin of the vehicle and outside a field of view of the image sensor, wherein the distraction area is determined from data captured by a position detection unit of the vehicle; determining a driver distraction value based on an extent to which the at least one viewing vector intersects the at least one distraction area of the at least one source of distraction, and triggering a warning signal in response to determining that the driver distraction value is greater than a threshold.

A driver may be a person who drives the vehicle. The vehicle may be any type of vehicle, including but not limited to a car, a truck, a bus, a train, a ship, an airplane, or a motorcycle. The vehicle may include at least one image sensor, for example a camera. The image sensor may be arranged inside the cabin of the vehicle. The field of view of the image sensor may be directed towards the driver of the vehicle. The driver, in particular a head region of the driver, may be in the field of view of the image sensor. The at least one image sensor may be configured to capture image data of the driver of the vehicle. In particular, the at least one image sensor may be configured to capture a head region of the driver. The vehicle may include at least one ultra-wideband sensor (UWB sensor), preferably three or more UWB sensors. The at least one UWB sensor may be configured to transmit and receive ultra-wideband signals. The ultra-wideband signals may be signals having a bandwidth of at least 500 MHz. The vehicle may include at least one Bluetooth sensor (BLE sensor). The at least one BLE sensor may be configured to transmit and receive Bluetooth signals.

The viewing vector may describe a viewing direction of the driver, for example, a direction in which the driver is looking. The distraction area may refer to an area inside the vehicle where the driver may be distracted from driving when looking at the area. In particular, the distracting area may be an area inside the cabin of the vehicle arranged to the left, right, above, below or behind relatively to the driver sitting on a driver's seat of the vehicle. The distraction area may also be arranged in front of the driver, for example on a dashboard of the vehicle, or on the windshield of the vehicle. The distraction area may be outside the field of view of the image sensor.

The position detection unit may be configured to determine the distraction area of the at least one source of distraction. The position unit may be configured to determine the distraction area based on sensor data, for example sensor data of the image sensor, the ultra-wideband sensor and/or the Bluetooth sensor. The position unit may be configured to determine the distraction area based on data signals from another unit, for example a wireless charging unit.

The source of distraction may be any source that distracts the driver from looking at the road in front of the vehicle. The source of distraction may be located in the distraction area. The source of distraction may be inside the cabin of the vehicle but outside the field of view of the image sensor.

The driver distraction value may be a value describing a measure of the driver's distraction. For example, the higher the distraction value, the more distracted the driver may be. The driver distraction value may represent a time when the driver is not looking at the road in front of the vehicle. The driver distraction value may represent a frequency how often the driver is not looking at the road in front of the vehicle in a predetermined time or a frequency how often the driver is looking at the distraction area in a predetermined time.

The warning signal may be at least one of an audio signal, a visual signal and a haptic signal. The threshold may be used to determine whether the driver is distracted. The threshold may be a time or a frequency. The threshold may be pre-defined, for example 2s, 3s, 4s, 5s or up to 10s or 3 times in 5s, 5 times in 10s, or the like. It is understood that a plurality of thresholds may be used for a plurality of warning signals. For example, a first threshold may be used for a first warning signal. The first warning signal may be a flashing light that signals the driver to refocus on the road. The first threshold may be for example 2s or 3 times in 5s. A second threshold may be used for a second warning signal different to the first warning signal. The second warning signal may be a vibrating steering wheel that signals the driver to concentrate on the road again. The second threshold may be for example 4s or 5 times in 10s. The second warning signal may be generated separately or in combination with the first warning signal. A third threshold may be used for a third warning signal different to the first warning signal and the second warning signal. The third warning signal may be an audio warning. The third threshold may be for example 8s or 10 times in 15s. The third warning signal may be generated separately or in combination with the first warning signal and second warning signal.

Generating a warning signal when the driver distraction value exceeds a predetermined threshold may serve as an immediate corrective measure to alert the driver, thereby reducing the likelihood of accidents caused by inattention. Thus, overall vehicle safety may be improved by prompting the driver to redirect their attention to driving tasks and reduce the risks associated with prolonged distraction.

According to an embodiment, the at least one viewing vector comprises an origin and a direction, wherein the origin is in an eye region of the driver and the direction points from the origin in a viewing direction of the driver. The eye region may include the two eyes, in particular a respective center of the eyes of the driver. It is understood that the eye region may also include a midpoint between the eyes, or between the center of the eyes of the driver. The origin may be the center of an eye or the midpoint between the two eyes of the driver.

The viewing direction may be a line of sight of the driver. The viewing direction or the direction of the viewing vector may be determined based on viewing direction signals determined by a driver monitoring system (DMS). The center of the eyes or the eyes may be detected by a camera of the driver monitoring system. The origin may be a point in space described in a vehicle coordinate system. The viewing vector may be a normalized vector.

The viewing vector with an origin in the eye region of the driver and a direction that corresponds to the driver's actual line of sight may provide a precise representation of where the driver is looking, leading to more accurate distraction detection.

It is understood that the viewing direction may also be determined based on a head direction or head orientation of the driver's head, in particular when the eyes of the driver are closed or not visible for the image sensor. Thus, the viewing direction may be an orientation or a direction of the head of the driver. In such a case, the origin of the viewing vector may be, for example, in the middle of the head of the driver or at a point on the forehead of the driver.

According to an embodiment, the at least one distraction area comprises an electronic device position. The electronic device position may be within the distraction area. The electronic device position may be a position where an electronic device is located inside the vehicle. The distraction area may be a limited area around the electronic device, in particular a portable electronic device, which is represented as a bounding box. The distraction area or the electronic device position may be located at a dashboard of the vehicle, on the windshield of the vehicle, and/or at a side shield of the vehicle.

Including electronic device positions as part of the distraction area may allow to monitor interactions of the driver with the electronic device, such as smartphones or infotainment systems. By recognizing electronic devices as potential distraction areas, the method may be able to address the growing concern of technology-induced driver inattention, enhancing the preventative measures against distracted driving. Furthermore, the ability to identify electronic devices as distraction areas may also enable to determine usage patterns over time.

According to an embodiment, the source of distraction is a portable electronic device. The portable electronic device may be a phone, in particular a mobile phone, a tablet, a computer, a pager, or the like. The portable electronic device may include at least one UWB sensor. The at least one UWB sensor may be configured to transmit and receive UWB signals. The portable electronic device may include at least one Bluetooth sensor (BLE sensor). The at least one BLE sensor may be configured to transmit and receive Bluetooth signals. The portable electronic device may be represented as a cube in the vehicle coordinate system. The cube, in particular one side of the cube, may be the distraction area. Each side of the cube may be constructed by triangles.

According to an embodiment, determining the distraction area of the at least one source of distraction is based on at least one of Bluetooth technology (BLE) or Ultra-Wideband technology (UWB). The use of UWB or BLE technology may allow to determine a position of the portable electronic device with centimeter accuracy. The utilization of ultra-wideband signals and/or Bluetooth signals to determine distraction areas inside the cabin of the vehicle may enhance the accuracy of detecting objects or regions that may divert the driver's attention, leading to more reliable driver distraction detection. By analyzing the viewing vector of the driver in relation to the identified distraction areas, a driver's focus may be determined and instances of distraction may promptly be detected, which may contribute to improved road safety.

According to an embodiment, the position detection unit comprises a wireless charging unit, and the data captured by the wireless charging unit comprises a signal indicating that the portable electronic device is docked in the wireless charging unit. The use of a signal from the wireless charging unit may allow to determine a position of the portable electronic device at the location of the wireless charging unit. Thus, the distraction area may be determined at the location of the wireless charging unit inside the cabin of the vehicle.

According to an embodiment, the method further comprising: determining an intersection of the at least one viewing vector and the at least one distraction area, wherein the driver distraction value is determined based on the intersection of the at least one viewing vector and the at least one distraction area. In other words, a driver distraction or the driver distraction value may be determined based on a period of time when the at least one viewing vector and the at least one distraction area intersect. The intersection of the at least one viewing vector and the at least one distraction area may describe that the driver is not looking in an expected direction, for example, at the road in front of the vehicle, but looking at the at least one distraction area, for example at a mobile phone. The intersection may be a point at which the at least one viewing vector intersects the at least one distraction area.

Determining the intersection of the viewing vector with the distraction area may provide a quantifiable measure of the driver's focus on a specific distraction. The intersection-based approach may enable to discern between mere glances and sustained attention on a distraction area, which may be critical for distinguishing between normal driving behavior and potentially dangerous distractions.

According to an embodiment, the method further comprising: determining a time period in which the at least one viewing vector intersects the at least one distraction area of the at least one source of distraction, wherein the driver distraction value is determined based on the time period. The time period may be a time interval or a duration in which the at least one viewing vector intersects the at least one distraction area inside the vehicle.

A driver distraction may be determined if the time period is greater than a threshold. The threshold may be pre-defined, for example 2s, 3s, 4s, 5s or up to 10s. The threshold may be used for determining acceptable glance durations. If the time period is above the threshold, an alert or a warning signal to the driver may be triggered. Thus, unnecessary interruptions for brief and safe glances may be avoided.

According to an embodiment, the method further comprising: determining a frequency at which the at least one viewing vector intersects the at least one distraction area of the at least one source of distraction, wherein the driver distraction value is determined based on the frequency. The frequency may be a number or a value that indicates how often the at least one viewing vector of the driver intersects the at least one distraction area inside the vehicle. In particular, the frequency may indicate how often the at least one viewing vector intersects the at least one distraction area in a certain period of time.

A driver distraction may be determined if the frequency is greater than a threshold. The threshold may be pre-defined, for example 3 times in 5s, 5 times in 10s, or the like. If the frequency is above the threshold, an alert or a warning signal to the driver may be triggered.

According to an embodiment, the driver distraction value is determined using a ray-plane intersection algorithm based on the at least one viewing vector and the at least one distraction area of the at least one source of distraction. The ray-plane intersection algorithm may determine if the viewing direction, i.e. the direction of the viewing vector, intersects the at least one distraction area. The distraction area may be a plane. The distraction area or the plane may be divided into a plurality of triangles. The ray-plane intersection algorithm may be a Möller-Trumbore intersection algorithm or any other suitable intersection algorithm.

The utilization of a ray-plane intersection algorithm may enhance the accuracy of determining the driver distraction value by precisely mapping the driver's gaze onto specific areas, for example, the at least one distraction area within the vehicle's interior.

According to an embodiment, the at least one viewing vector of the driver is determined using a Driver Monitoring System (DMS). The driver monitoring system may include at least one camera. Thus, the DMS may be a camera-based system. The DMS may be configured to identify or determine a driver's face in a field of view of the camera. The at least one distraction area may not be in the field of view of the camera. The DMS may further be configured to observe the driver's face, in particular the eyes of the driver and determine relevant signals like a gaze vector or the viewing vector, etc. The driver monitoring system may be a system for monitoring the driver's attention and/or concentration. The DMS may determine or collect comprehensive data regarding the driver's head position and/or orientation and eye movement, enabling a more nuanced understanding of driver behavior and potential distractions.

According to an embodiment, the method further comprising: determining at least one viewing area based on the at least one viewing vector of the driver, wherein the driver distraction value is determined based on a comparison of the at least one viewing area and the at least one distraction area of the at least one source of distraction. The at least one viewing area may be inside the cabin of the vehicle. The at least one viewing area may be an area that the driver is looking at. The comparison of the at least one viewing area and the at least one distraction area may be performed (in other words: carried out) using a method for determining an overlapping of two areas, in particular of two planes. For example, the higher the overlap, the more distracted the driver may be.

Determining the driver's viewing area based on their viewing vector may allow for a spatially-aware analysis of attention, which can more accurately reflect the driver's actual focus area compared to systems that do not consider viewing geometry.

According to an embodiment, the method further comprising: receiving at least one prior viewing vector, wherein the driver distraction value is determined based on the at least one viewing vector, the at least one prior viewing vector and the at least one distraction area of the at least one source of distraction. The at least one prior viewing vector may have been determined at a previous point of time, for example using the methods as described herein. The at least one prior viewing vector may describe a viewing direction of the driver in the past (in other words: a historical viewing direction). The historical viewing directions may be based on frequent and short glances of the driver at a same point or at a same area in the cabin of the vehicle.

It is understood that at least one prior viewing area may also be determined based on the at least one prior viewing vector or based on a plurality of prior viewing vectors. The distraction value may be determined based on a comparison of the at least one viewing area, the at least one prior viewing area and the distraction area of the at least one source of distraction.

The use of historical viewing vector data, i.e. prior viewing vectors, may allow for a temporal analysis of driver attention, providing a more comprehensive profile of driver engagement over time. Thus, the at least one prior viewing vector may increase accuracy of the driver distraction detection.

According to an embodiment, the method further comprising: receiving at least one prior distraction area of the at least one source of distraction, wherein the driver distraction value is determined based on the at least one viewing vector, the at least one distraction area and the at least one prior distraction area. The at least one prior distraction area may have been determined at a previous point of time, for example using the methods as described herein. The at least one prior distraction area may describe an electronic device position in the past (in other words: a historical distraction area).

The use of historical distraction area data may allow for a temporal analysis of distraction areas. Thus, the at least one prior distraction area may increase accuracy of the driver distraction detection, allowing for a more comprehensive assessment of the driver's attention over time.

According to an embodiment, the method further comprising: determining at least one updated distraction area based on the at least one prior distraction area and the at least one distraction area, wherein the driver distraction value is determined based on the at least one updated distraction area. The at least one updated distraction area may be a combination of the at least one prior distraction area and the at least one distraction area.

A refined analysis of the driver's focus may be possible by updating the distraction areas, which may lead to an improved prediction of driver behavior and potential driver distraction.

In another aspect, the present disclosure is directed at a computer system, said computer system comprising a plurality of computer hardware components configured to carry out several or all steps of the computer implemented method described herein. The computer system can be part of the vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system described herein and at least one sensor.

The vehicle can be a car or truck and the sensor may be mounted on the vehicle. The at least one sensor may be an image sensor. The image sensor may be directed to an area inside the vehicle, in particular to an area of a driver seat. Images may be captured by the at least one image sensor. The image sensor may be a camera. Another sensor of the vehicle may be a ultra-wideband sensor (UWB sensor) and/or a Bluetooth sensor (BLE sensor). The UWB sensor may be configured to send and receive UWB signals. The BLE sensor may be configured to send and receive Bluetooth signals.

In another aspect, the present disclosure is directed at a non-transitory computer readable medium comprising instructions for carrying out several or all steps or aspects of the computer implemented methods described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented methods described herein.

It is understood that features described in connection with the methods can be realized in the computer system as well as the non-transitory computer readable medium and vice versa.

### DRAWINGS

Exemplary embodiments and functions of the present disclosure are described herein in conjunction with the following drawings, showing schematically:
- Fig. 1: a system for monitoring a driver of a vehicle according to an embodiment;
- Fig. 2A: an environment inside a cabin of the vehicle with indicated viewing areas according to an embodiment;
- Fig. 2B: the environment inside the cabin of the vehicle of Fig. 2A with indicated distraction areas according to an embodiment;
- Fig. 2C: the environment inside the cabin of the vehicle of Figs. 2A and 2B with indicated viewing areas and distraction areas according to an embodiment;
- Fig. 3: a flow diagram illustrating a method for monitoring a driver of a vehicle according to an embodiment; and
- Fig. 4: a computer system with a plurality of computer hardware components configured to carry out steps of a computer implemented method for monitoring a driver of a vehicle according to an embodiment.

### DETAILED DESCRIPTION

Driver Monitoring Systems (DMSs) are more and more common in many vehicles, for example cars or trucks. The DMSs may not only be used for safety reasons but also for driver-vehicle interactions like driver seat positioning based on an identified face of the driver, side mirrors adjustment and so on. However, the most important aspects of such systems may be safety aspects. There are some regulations, like NCAP or GSR, that determine requirements for how DMSs should work. One of these requirements is related to driver distraction.

A Driver Monitoring System (DMS) may be configured to analyze a driver's viewing direction in relation to specific distraction areas within a vehicle. A distraction area may be an area where an electronic device is located, for example a mobile phone. Ultra-wideband signals (UWB signals) may be used to define or detect distraction areas. Additionally or alternatively, Bluetooth signals (UWB signals) may be used to define or detect distraction areas. Advanced algorithms, for example an intersection algorithm, may be performed (in other words: carried out) to assess an intersection of viewing vectors with the distraction areas. The viewing vectors may describe viewing directions of the driver. The method for monitoring a driver, in particular a method for distraction detection as described in more detail in the following paragraphs may identify an extent to which at least one viewing vector of the driver intersects at least one distraction area. The extent of distraction may be quantified in periods of times or frequencies of driver distraction and may generate appropriate alerts or warning signals to the driver, thereby increasing driver awareness and safety.

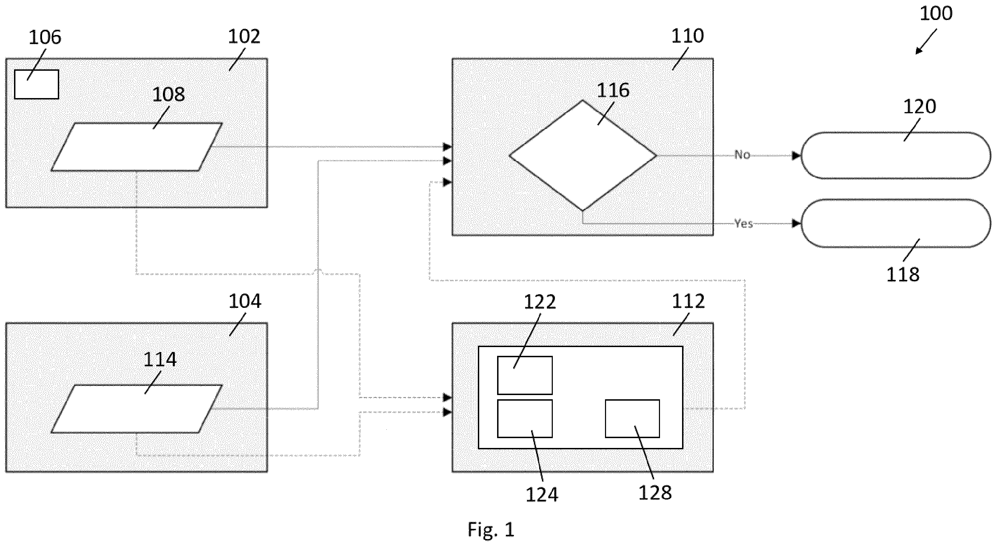

Fig. 1 shows a system for monitoring a driver of a vehicle, in particular a distraction detection system 100 according to an embodiment. The driver distraction detection system 100 may include a viewing direction detection unit 102, in particular a driver monitoring system (DMS), a position detection unit 104, in particular an electronic device position detection unit, and a distraction detection unit 110. The position detection unit 104 may be different from the viewing direction detection unit 102.

The viewing direction detection unit 102 may include a camera 106, thus, the viewing direction detection unit 102 may be a camera based system. The camera 106 may be placed in front of a driver's face inside the cabin of the vehicle, for example at or in a rear view mirror of the vehicle, at an A-pillar of the vehicle, or any other suitable position inside the cabin of the vehicle so that a field of view of the camera 106 is directed towards the rear of the cabin of the vehicle, in particular towards an upper part of a driver seat of the vehicle. This placement of the camera 106 may allow the viewing direction detection unit 102 to observe a driver's head, eyes, etc. of a driver seated in the driver's seat and determine relevant signals like a gaze vector, a viewing vector 108, and so on.

In particular, the viewing direction detection unit 102 is configured to determine at least one viewing vector 108 of the driver of the vehicle. The viewing vector 108 may be determined based on a viewing direction signal. The viewing vector 108 may include a vector's origin as a point in space, for example in the vehicle coordinate system, and a vector's direction. The viewing vector 108 may be a normalized vector. Thus, the at least one viewing vector 108 may include an origin and a direction, wherein the origin may be in an eye region of the driver and the direction points from the origin in a viewing direction of the driver. The at least one viewing vector 108 may be an output of the viewing direction detection unit 102.

Phone usage detection may also be possible using the viewing direction detection unit 102 but with one significant constraint, the phone must appear within the field of view of the camera 106. If the phone or an electronic device is not visible for the camera 106, for example, when the phone is placed on the windshield, an air vent, or the dashboard of the vehicle, the phone or the electronic device may not be within the field of view of the camera 106. As a result, the viewing direction detection unit 102 may not be able to detect whether the driver is looking at the road or at the electronic device. If the driver is looking at the electronic device instead of the road, the driver may be distracted.

One possibility to detect or rather predict if the driver is distracted by the electronic device, in particular a phone placed in these areas, i.e. areas not visible to the camera 106 of the viewing direction detection unit 102, may be to predefine possible phone positions. One or more areas may be defined in the vehicle coordinate system where drivers most frequently place their cell phones. A ray-plane intersection algorithm may be used to determine if the driver is looking at the one or more predefined area. The ray-plane intersection algorithm may determine whether the viewing vector 108 of the driver intersects with one of the predefined areas. If this is the case, it may be an indication that the driver is looking at the mobile phone.

Another possibility to predict if the driver is distracted by the phone placed in areas not visible to the camera 106 of the viewing direction detection unit 102 may be to analyze the viewing vectors 108 of the driver, i.e. the viewing directions of the driver. In data science, historical data plays a very important role and this may also be the case for driver monitoring systems. Analysis of the viewing vectors 108 may allow to identify certain trends. One of the possible trends may be: frequent and short glances at a same point or at a same area inside the vehicle. These trends may indicate that the driver is looking at the mobile phone.

However, an uncertainty as to whether the phone is actually in a certain area still remains if predefined distraction areas are used or the driver's viewing directions in the past are analyzed. It may be possible to combine both methods or algorithms in order to improve the prediction results, but it is still a prediction not a certainty that the mobile phone is actually in the area the driver is looking at.

The methods and systems for monitoring a driver of a vehicle as described herein solves this prediction issue. The methods and systems are based on a real position of an electronic device inside the cabin of the vehicle, not on guessing whether the electronic device is present or not.

The method for monitoring a driver of a vehicle fuses signals of the viewing direction detection unit 102 and the position detection unit 104 to detect driver distraction using the distraction detection unit 110. The position detection unit 104 may be configured to determine at least one distraction area 114, wherein the at least one distraction area 114 is determined based on ultra-wideband signals (UWB signals), Bluetooth signals (BLE signals) or signals from another unit like a wireless charging unit.

The position detection unit 104 may use Ultra-Wideband technology, in particular an UWB phone position detection algorithm as described, for example, in US 11,917,094 B2 to detect a position of a mobile phone in the vehicle. It is understood, that a position of any kind of electronic device having a UWB sensor may be determined by the position detection unit 104. The electronic device may include an UWB sensor having a transmitter and a receiver for sending and receiving ultra-wideband signals. The vehicle or the driver distraction detection system 100 may also include at least one UWB sensor having a transmitter and a receiver for sending and receiving ultra-wideband signals. The UWB sensor of the electronic device may send UWB signals that are received by the UWB sensor of the vehicle or the driver distraction detection system 100, or vice versa. The position detection unit 104 may determine a position of the electronic device inside the cabin of the vehicle based on the UWB signals. More precisely, a position of the electronic device may be determined as a point in space based on the UWB signals, for example in the vehicle coordinate system, and the position of the electronic device or an area around the position which may describe the at least one distraction area 114 may be an output of the position detection unit 104.

The position detection unit 104 may use Bluetooth technology to detect the position of a mobile phone inside the cabin of the vehicle. It is understood, that a position of any kind of electronic device having a Bluetooth sensor may be determined by the position detection unit 104. The electronic device may include a Bluetooth sensor (BLE sensor) having a transmitter and a receiver for sending and receiving Bluetooth signals. The vehicle or the driver distraction detection system 100 may also include at least one Bluetooth sensor having a transmitter and a receiver for sending and receiving Bluetooth signals. The BLE sensor of the electronic device may send Bluetooth signals that are received by the BLE sensor of the vehicle or the driver distraction detection system 100, or vice versa. The position detection unit 104 may determine a position of the electronic device inside the cabin of the vehicle based on the BLE signals. More precisely, a direction of a Bluetooth signal may be used along with a detected signal strength (RSSI) of the Bluetooth signal via an Angle of Arrival (AoA) to determine and track the position of a portable electronic device. The position of the portable electronic device may be determined as a point in space based on the BLE signals, for example in the vehicle coordinate system, and the position of the electronic device or an area around the position which may describe the at least one distraction area 114 may be an output of the position detection unit 104.

The position detection unit 104 may include a wireless charging unit to detect the position of a mobile phone inside the cabin of the vehicle. It is understood, that a position of any kind of electronic device that can be charged in the wireless charging unit may be determined by the position detection unit 104. A position of the wireless charging unit inside the cabin of the vehicle may be known. The position of the wireless charging unit may be predetermined. The wireless charging unit may capture data that includes a signal indicating that the portable electronic device is docked in the wireless charging unit. The position detection unit 104 may determine a position of the electronic device inside the cabin of the vehicle based on the data captured by the wireless charging unit or the signal indicating that the portable electronic device is docked in the wireless charging unit. The position of the portable electronic device may be determined as a point in space, for example in the vehicle coordinate system, and the position of the electronic device or an area around the position which may describe the at least one distraction area 114 may be an output of the position detection unit 104.

The output of the viewing direction detection unit 102, in particular the at least one viewing vector 108, and the output of the position detection unit 104, in particular the at least one distraction area 114, may be an input of the distraction detection unit 110. The distraction detection unit 110 may be configured to determine a driver distraction value based on the at least one viewing vector 108 and the at least one distraction area 114. In particular, the distraction detection unit 110 may be configured to determine an intersection of the at least one viewing vector 108 and the at least one distraction area 114, wherein the driver distraction value is determined based on an extent to which the at least one viewing vector 108 intersects the at least one distraction area 114.

The driver distraction value may be determined using an intersection algorithm 116, in particular a ray-plane intersection algorithm based on the at least one viewing vector 108 and the at least one distraction area 114. The intersection algorithm 116 may produce a signal indicating if the driver is distracted, for example by looking at the mobile phone in the determined distraction area 114.

The intersection algorithm 116 may use mathematic equations to determine if the at least one viewing vector 108 intersects the at least one distraction area 114. For example, the at least one distraction area 114 may be described as a plane, wherein the plane is divided into a plurality of triangles that may be used by the intersection algorithm 116 to determine an intersection of the at least one viewing vector 108 with one of the triangles. It is understood that the electronic device may be represented as a cube with the position of the electronic device determined using the position detection unit 104 being a geometric center of the cube. Each of the six faces of the cube may be divided into a plurality of triangles that may be used by the intersection algorithm 116 to determine an intersection of the at least one viewing vector 108 with one of the faces of the cube.

The at least one viewing vector 108 may be defined by an origin point *O* and a direction vector *v*. Every point on the viewing vector 108 may be expressed by *r*(*t*)*=O+tv,* where the parameter *t* ranges from zero to infinity. Each of the triangles may be defined by three vertices *v*1, *v2* and *v*3. Any point on the triangle may be expressed as a convex combination of the triangle's vertices: *P*=q*v*1+r*v*2+s*v*3. The expression of the viewing vector 108 *r*(*t*)*=O+tv* may be set equal to the plane expression *P*=*qv*1+r*v*2+*sv*3 to find an intersection between the at least one viewing vector 108 and the at least one distraction area 114.

If the intersection algorithm determines that the at least one viewing vector 108 intersects the at least one distraction area 114, the distraction value may indicate that a driver distraction 118 is present. If the at least one viewing vector 108 does not intersect any of the at least one distraction areas 114, the distraction value may indicate that no driver distraction 120 is present, i.e. the driver is not distracted by looking at the electronic device.

If the driver distraction 118 is present, a warning signal may be generated or triggered by the distraction detection unit 110. The warning signal may alert the driver that the driver is distracted by an electronic device. The distraction detection unit 110 may be configured to generate the warning signal if the driver distraction value is greater than a threshold.

The distraction detection unit 110 may further be configured to determine a time period in which the at least one viewing vector 108 intersects the at least one distraction area 114, wherein the driver distraction value is determined based on the time period. The warning signal may be generated if the time period exceeds a predefined threshold.

The distraction detection unit 110 may further be configured to determine a frequency that describes how often the at least one viewing vector 108 intersects the at least one distraction area 114, wherein the driver distraction value is determined based on the frequency. The warning signal may be generated if the frequency exceeds a predefined threshold.

The warning signal can be indicated to the driver by lights inside the cabin of the vehicle. The warning signal may also be an acoustic signal. For example, an audio warning may alert the driver of driver distraction. Alternatively, in an autonomous vehicle, for example, the vehicle may take control of the steering wheel or brakes if driver distraction is detected. It is understood that the warning signal may be any action the can alert the driver of driver's distraction.

Referring back to Fig. 1, the driver distraction detection system 100 may further include a trend analysis system 112. The trend analysis system 112 may be configured to store and analyze historical data, for example viewing vectors 108 and/or distraction areas 114 at previous points of time. An analysis of the historical data may increase a credibility of the driver distraction detecting using the method for monitoring a driver of a vehicle as described herein.

The trend analysis system 112 may be configured to receive at least one viewing vector 108 from the viewing direction detection unit 102. The at least one viewing vector 108 may be determined at a prior point of time, thus the at least one viewing vector 108 may be a prior viewing vector 122. The prior viewing vector 122 may describe a viewing direction of the driver in the past, i.e. where the driver was looking in the past. In particular, the trend analysis system 112 may be configured to receive a plurality of prior viewing vectors 122. The trend analysis system 112 may further be configured to analyze the plurality of prior viewing vectors 122 to determine a trend of the prior viewing vectors 122, for example, frequent and short glances at the same point inside the cabin of the vehicle, i.e. viewing directions in which the driver frequently looks. The historical data, in particular the at least one prior viewing vector 122 or the trend of the prior viewing vectors 122 may be an output of the trend analysis system 112 and an additional input of the distraction detection unit 110. The distraction detection unit 110 may be configured to determine the driver distraction value based on the at least one viewing vector 108, the at least one prior viewing vector 122 and the at least one distraction area 114 of at least one source of distraction.

The trend analysis system 112 may also be configured to receive at least one distraction area 114 from the position detection unit 104. The at least one distraction area 114 may be determined at a prior point of time, thus the at least one distraction area 114 may be a prior distraction area 124. The prior distraction area 124 may include an area or a position inside the cabin of the vehicle where a portable electronic device, in particular a mobile phone, has been detected in the past using the position detection unit 104. In particular, the trend analysis system 112 may be configured to receive a plurality of prior distraction areas 124. The trend analysis system 112 may further be configured to analyze the plurality of prior distraction areas 124 to determine a trend of the prior distraction areas 124, i.e. areas where an electronic device has been frequently detected inside the cabin of the vehicle. The historical data, in particular the at least one prior distraction area 124 or the trend of the prior distraction areas 124 may be an output of the trend analysis system 112 and an additional input of the distraction detection unit 110. The distraction detection unit 110 may be configured to determine the driver distraction value based on the at least one viewing vector 108, the at least one distraction area 114 of at least one source of distraction and the at least one prior distraction area 124.

The trend analysis system 112 may further be configured to determine at least one updated distraction area 128 based on at least one prior distraction area 124 and the at least one distraction area 114. The updated distraction area 128 may be determined by combining the at least one distraction area 114 to the at least one prior distraction area 124 if the at least one distraction area 114 and the at least one prior distraction area 124 are overlapping. It is understood that the at least one updated distraction area 128 may be determined by other suitable methods, for example, by building an outline of the at least one distraction area 114 and the at least one prior distraction area 124.

The at least one updated distraction area 128 may be an output of the trend analysis system 112 and an additional input of the distraction detection unit 110. The distraction detection unit 110 may be configured to determine the driver distraction value based on the at least one updated distraction area 128.

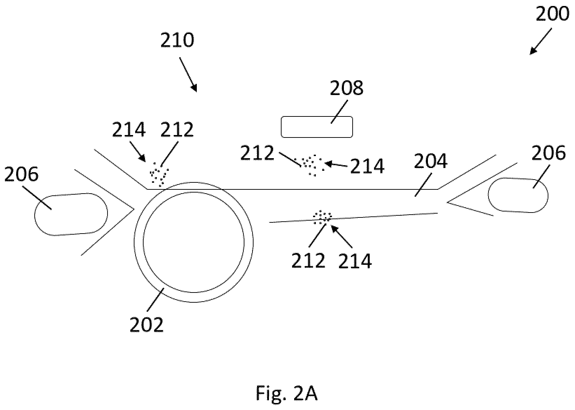

Fig. 2A shows an environment 200 inside a cabin of a vehicle with indicated viewing areas 214 according to an embodiment. The vehicle may include a steering wheel 202, a dashboard 204, side mirrors 206, a rear mirror 208 and a windshield 210. Fig. 2A shows three different viewing areas 214, each including a plurality of points 212. The points 212 may indicate viewing directions of the driver of the vehicle. The points 212 may represent frequent and short glances of the driver at the respective points 212 i.e. viewing directions in which the driver frequently looks.

The points 212 may be determined based on a respective viewing vector 108 (see Fig. 1), in particular based on an intersection of the viewing vector 108 with a plane. The respective points 212 may be determined using an intersection algorithm 116 (see Fig. 1) as described herein, wherein the plane may be the windshield 210 or the dashboard 204 of the vehicle. The plane can, however, also be different from the windshield 210 or the dashboard 204 of the vehicle. The viewing areas 214 may be described by the plane. For example, a surface of the bounding box around the plurality of points 212 may be located within the plane. The plane may be the same plane as the plane of the distraction area 216.

The viewing areas 214 may be determined using the distraction detection unit 110 (see Fig. 1). The distraction detection unit 110 may be configured to determine at least one viewing area 214 based on the at least one viewing vector 108 of the driver. In particular, the at least one viewing area 214 may be determined based on a plurality of points 212 indicating viewing directions of the driver. The at least one viewing area 214 may be a bounding box (not shown in Fig. 2A) around the plurality of points 212. The at least one viewing area 214 may represent frequent and short glances of the driver at a same area inside the cabin of the vehicle.

As shown in Fig. 2A, a first viewing area 214 is determined in the center of the dashboard 204, a second viewing area 214 is determined on the left-hand side of the windshield 210 above the steering wheel 202, and a third viewing area 214 is determined in the center of the windshield 210 under the rear mirror 208. It is understood that further viewing areas 214 may be determined at different locations inside the vehicle, for example in an area between the left-hand side mirror 206 and the steering wheel 202.

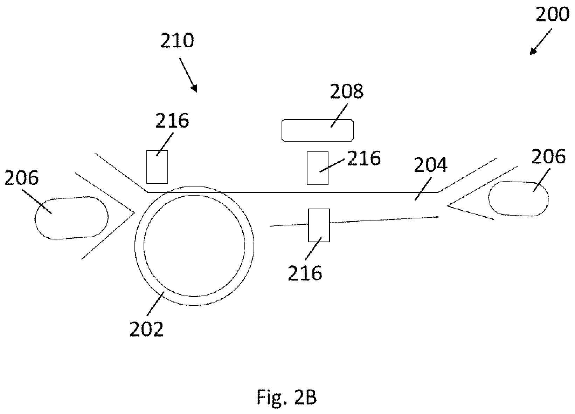

Fig. 2B shows the environment 200 inside the cabin of the vehicle of Fig. 2A with indicated distraction areas 216 according to an embodiment. Fig. 2B shows three different distraction areas 216. The distraction areas 216 may indicate a position of a portable electronic device, for example a mobile phone. The distraction areas 216 may be determined using the position detection unit 104 (see Fig. 1). In particular, the distraction areas 216 may be determined based on ultra-wideband signals, Bluetooth signals or signals of another unit, for example a wireless charging unit. The distraction areas 216 may be described by a plane. The plane may be the windshield 210 or the dashboard 204 of the vehicle. The plane can, however, also be different from the windshield 210 or the dashboard 204 of the vehicle. The plane may be the same plane as the plane of the viewing area 214.

It is understood that the plane of each viewing area 214 may be a different plane as the plane of a respective distraction area 216, and vice versa. Therefore, the plane of each viewing area 214 may be projected to the respective plane of the distraction area 216, and vice versa.

As shown in Fig. 2B, a first distraction area 216 is determined in the center of the dashboard 204, a second distraction area 216 is determined on the left-hand side of the windshield 210 above the steering wheel 202, and a third distraction area 216 is determined in the center of the windshield 210 under the rear mirror 208. It is understood that further distraction areas 216 may be determined at different locations inside the cabin of the vehicle, for example in an area between the left-hand side mirror 206 and the steering wheel 202. The first, second and third distraction areas 216 may represent typical areas inside the cabin of the vehicle where an electronic device or a portable electronic device, in particular a mobile phone is placed by the driver.

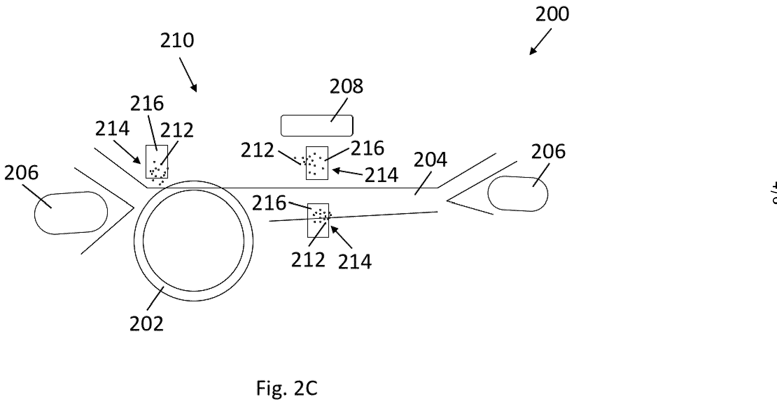

Fig. 2C shows the environment 200 inside the cabin of the vehicle of Figs. 2A and 2B with indicated viewing areas 214 and distraction areas 216 according to an embodiment. In particular, Fig. 2C is a combination of Figs. 2A and 2B. For reasons of efficiency, the points 212, the viewing areas 214 and the distraction areas 216 are not described again and reference is made instead to Figures 2A and 2B. As shown in Fig. 2C, a respective distraction area 216 is overlapping at least one point 212 of a respective viewing area 214. For example, the first distraction area 216 located in the center of the dashboard 204 overlaps the first viewing area 214 or a plurality of points 212 of the first viewing area 214. The same applies for the second and third distraction areas 216 and the respective second and third viewing areas 214.

The points 212 may be determined based on a respective viewing vector 108 (see Fig. 1), in particular based on an intersection of the viewing vector 108 with one of the distraction areas 216. The respective points 212 may be determined using the intersection algorithm 116 of the distraction detection unit 110 (see Fig. 1). The distraction detection unit 110 may be configured to detect or determine a driver distraction value based on the at least one viewing vector 108 and the at least one distraction area 216, in particular based on at least one intersection of the at least one viewing vector 108 and the at least one distraction area 216. The distraction value may describe an extent or a measure of the driver's distraction. For example, the distraction value may depend on the number of points 212 intersecting the distraction area 216. The more points 212 intersect the respective distraction area 216, the higher the distraction value may be. The higher the distraction value, the more distracted the driver may be.

The distraction detection unit 110 may further be configured to detect or determine the driver distraction value based on a comparison of the at least one viewing area 214 and the at least one distraction area 216. The comparison of the at least one viewing area 214 and the at least one distraction area 216 may be performed (in other words: carried out) using a method for determining an overlap of two areas, for example, an overlap of the first viewing area 214 and the first distraction area 216, an overlap of the second viewing area 214 and the second distraction area 216, or an overlap of the third viewing area 214 and the third distraction area 216. For example, the higher the overlap between the viewing area 214 and the respective distraction area 216, the higher the distraction value may be and the more distracted the driver may be. Thus, the higher the overlap between the viewing area 214 and the respective distraction area 216, the higher credibility of the distraction value may be.

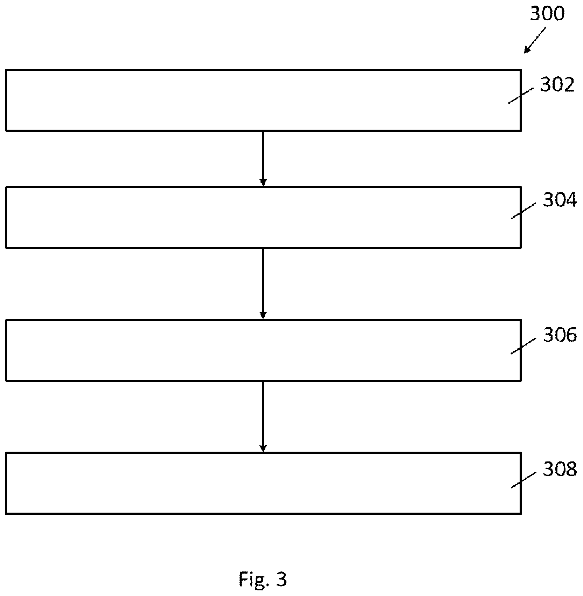

Fig. 3 shows a flow diagram 300 illustrating a method for monitoring a driver of a vehicle according to various embodiments. At 302, at least one viewing vector of a driver of a vehicle may be determined from image data captured by an image sensor located in a cabin of the vehicle. At 304, a distraction area of at least one source of distraction inside the cabin of the vehicle and outside a field of view of the image sensor may be determined, wherein the distraction area is determined from data captured by a position detection unit of the vehicle. At 306, a driver distraction value may be determined based on an extent to which the at least one viewing vector intersects the at least one distraction area of the at least one source of distraction. At 308, a warning signal is triggered in response to determining that the driver distraction value is greater than a threshold.

According to an embodiment, the source of distraction may be a portable electronic device.

According to an embodiment, determining the distraction area of the at least one source of distraction may be based on at least one of Bluetooth technology, BLE, or Ultra-Wideband technology, UWB.

According to an embodiment, the position detection unit may include a wireless charging unit, and the data captured by the wireless charging unit may include a signal indicating that the portable electronic device is docked in the wireless charging unit.

According to an embodiment, the at least one viewing vector may include an origin and a direction, wherein the origin may be in an eye region of the driver and the direction may point from the origin in a viewing direction of the driver.

According to an embodiment, the at least one distraction area may include an electronic device position.

According to an embodiment, the method may further include: determining an intersection of the at least one viewing vector and the at least one distraction area, wherein the driver distraction value is determined based on the intersection of the at least one viewing vector and the at least one distraction area.

According to an embodiment, the method may further include: determining a time period and/or a frequency at which the at least one viewing vector intersects the at least one distraction area, wherein the driver distraction value is determined based on the time period and/or the frequency.

According to an embodiment, the driver distraction value may be determined using a ray-plane intersection algorithm based on the at least one viewing vector and the at least one distraction area of the at least one source of distraction.

According to an embodiment, the at least one viewing vector of the driver may be determined using a Driver Monitoring System, DMS.

According to an embodiment, the method may further include: generating a warning signal if the driver distraction value is greater than a threshold.

According to an embodiment, the method may further include: determining at least one viewing area based on the at least one viewing vector of the driver, wherein the driver distraction value is determined based on a comparison of the at least one viewing area and the at least one distraction area of the at least one source of distraction.

According to an embodiment, the method may further include: receiving at least one prior viewing vector, wherein the driver distraction value is determined based on the at least one viewing vector, the at least one prior viewing vector and the at least one distraction area of the at least one source of distraction.

According to an embodiment, the method may further include: receiving at least one prior distraction area, wherein the driver distraction value is determined based on the at least one viewing vector, the at least one distraction area and the at least one prior distraction area of the at least one source of distraction.

According to an embodiment, the method may further include: determining at least one updated distraction area based on the at least one prior distraction area and the at least one distraction area, wherein the driver distraction value is determined based on the at least one updated distraction area.

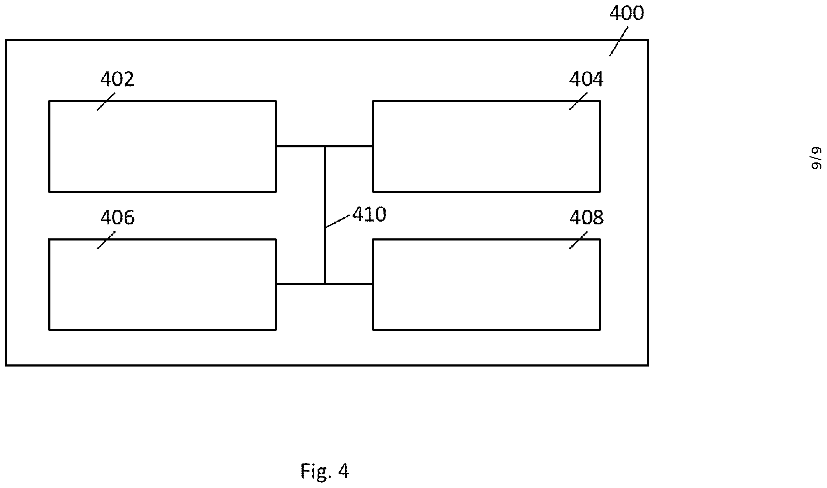

Each of the steps 302, 304, 306, 308 and the further steps described above may be performed by computer hardware components, for example as described with reference to Fig. 4.

Fig. 4 shows a computer system 400 with a plurality of computer hardware components configured to carry out steps of a computer implemented method for monitoring a driver of a vehicle according to various embodiments. The computer system 400 may include a processor 402, a memory 404, and a non-transitory data storage 406. A sensor 408, for example a camera, a UWB sensor and/or a BLE sensor, may be provided as part of the computer system 400 (like illustrated in Fig. 4), or may be provided external to the computer system 400.

The processor 402 may carry out instructions provided in the memory 404. The non-transitory data storage 406 may store a computer program, including the instructions that may be transferred to the memory 404 and then executed by the processor 402. The sensor 408 may be used to determine input data, for example image data that is provided to the viewing direction detection unit 102 for determining at least one viewing vector 108 and/or data from a Bluetooth sensor or an UWB sensor to the position detection unit 104 for determining at least one distraction area 114.

The processor 402, the memory 404, and the non-transitory data storage 406 may be coupled with each other, e.g. via an electrical connection 410, such as e.g. a cable or a computer bus or via any other suitable electrical connection to exchange electrical signals. The sensor 408 may be coupled to the computer system 400, for example via an external interface, or may be provided as parts of the computer system (in other words: internal to the computer system, for example coupled via the electrical connection 410).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 400.

This application addresses the problem of driver distraction in vehicles, which can lead to increased risk of accidents and impaired driving performance. Methods and systems for monitoring a driver in a vehicle are provided, in particular a phone distraction detection system and algorithm, for accurately detecting and quantifying driver distraction by analyzing the driver's viewing direction in relation to specific distraction areas inside the cabin of the vehicle, such as a phone position inside the vehicle. By utilizing ultra-wideband signals, Bluetooth signals or signals from other units of the vehicle, for example a wireless charging station, to define distraction areas and employing advanced algorithms to assess the intersection of viewing vectors and the distraction areas, the method may aim to identify periods of driver distraction and may generate appropriate alerts or warning signals, thereby enhancing driver awareness and safety.

### Reference numeral list

- 100: driver distraction detection system
- 102: viewing direction detection unit
- 104: position detection unit
- 106: camera
- 108: viewing vector
- 110: distraction detection unit
- 112: trend analysis system
- 114: distraction area
- 116: intersection algorithm
- 118: driver distraction
- 120: no driver distraction
- 122: prior viewing vector
- 124: prior distraction area
- 128: updated distraction area

- 200: environment inside a cabin of a vehicle
- 202: steering wheel
- 204: dashboard
- 206: side mirror
- 208: rear mirror
- 210: windshield
- 212: point
- 214: viewing area
- 216: distraction area

- 300: flow diagram illustrating a method for monitoring a driver of a vehicle according to various embodiments
- 302: step of determining at least one viewing vector
- 304: step of determining a distraction area
- 306: step of determining a driver distraction value
- 308: step of triggering a warning signal

- 400: computer system according to various embodiments
- 402: processor
- 404: memory
- 406: non-transitory data storage
- 408: image sensor
- 410: connection

## Claims

1. Computer implemented method for monitoring a driver of a vehicle, the method comprising the following steps carried out by computer hardware components:
determining (302), from image data captured by an image sensor located in a cabin of the vehicle, at least one viewing vector (108) of the driver;
determining (304) a distraction area (114, 216) of at least one source of distraction inside the cabin of the vehicle and outside a field of view of the image sensor, wherein the distraction area (114, 216) is determined from data captured by a position detection unit (104) of the vehicle;
determining (306) a driver distraction value based on an extent to which the at least one viewing vector (108) intersects the at least one distraction area (114, 216) of the at least one source of distraction; and
triggering (308) a warning signal in response to determining that the driver distraction value is greater than a threshold.

2. The method of claim 1,
wherein the source of distraction is a portable electronic device.

3. The method of at least one of claims 1 or 2,
wherein determining the distraction area (114, 216) of the at least one source of distraction is based on at least one of Bluetooth technology, **BLE,** or Ultra-Wideband technology, UWB.

4. The method of at least one of claims 2 to 3,
wherein the position detection unit (104) comprises a wireless charging unit, and the data captured by the wireless charging unit comprises a signal indicating that the portable electronic device is docked in the wireless charging unit.

5. The method of at least one of claims 1 to 4, further comprising:
determining a time period and/or a frequency at which the at least one viewing vector (108) intersects the at least one distraction area (114, 216) of the at least one source of distraction,
wherein the driver distraction value is determined based on the time period and/or the frequency.

6. The method of at least one of claims 1 to 5,
wherein the driver distraction value is determined using a ray-plane intersection algorithm based on the at least one viewing vector (108) and the at least one distraction area (114, 216) of the at least one source of distraction.

7. The method of at least one of claims 1 to 6,
wherein the at least one viewing vector (108) comprises an origin and a direction, and
wherein the origin is in an eye region of the driver and the direction points from the origin in a viewing direction of the driver.

8. The method of at least one of claims 1 to 7,
wherein the at least one viewing vector (108) of the driver is determined using a Driver Monitoring System, DMS.

9. The method of at least one of claims 1 to 8, the method further comprising:
determining at least one viewing area (214) based on the at least one viewing vector (108) of the driver,
wherein the driver distraction value is determined based on a comparison of the at least one viewing area (214) and the at least one distraction area (114, 216) of the at least one source of distraction.

10. The method of at least one of claims 1 to 9, the method further comprising:
receiving at least one prior viewing vector (122),
wherein the driver distraction value is determined based on the at least one viewing vector (108), the at least one prior viewing vector (122) and the at least one distraction area (114, 216) of the at least one source of distraction.

11. The method of at least one of claims 1 to 10, the method further comprising:
receiving at least one prior distraction area (124) of the at least one source of distraction,
wherein the driver distraction value is determined based on the at least one viewing vector (108), the at least one distraction area (114, 216) and the at least one prior distraction area (124).

12. The method of claim 10 or 11, the method further comprising:
determining at least one updated distraction area (128) based on the at least one prior distraction area (124) and the at least one distraction area (114, 216),
wherein the driver distraction value is determined based on the at least one updated distraction area (128).

13. Computer system (400), the computer system (400) comprising a plurality of computer hardware components configured to carry out steps of the computer implemented method of at least one of claims 1 to 12.

14. Vehicle, comprising the computer system of claim 13 and at least one sensor.

15. Non-transitory computer readable medium comprising instructions which, when executed by a computer, cause the computer to carry out the computer implemented method of at least one of claims 1 to 12.
